(19) Europäisches Patentamt / European Patent Office / Office européen des brevets

(11) **EP 2 842 647 B1**

(12) **FASCICULE DE BREVET EUROPEEN**

(45) Date de publication et mention
de la délivrance du brevet:
**11.11.2020 Bulletin 2020/46**

(51) Int Cl.:
**B21C 37/04** *(2006.01)*   **B23K 35/40** *(2006.01)*
**B21C 1/12** *(2006.01)*   **B23K 35/02** *(2006.01)*

(21) Numéro de dépôt: **13182349.4**

(22) Date de dépôt: **30.08.2013**

(54) **Procédé de fabrication de fil fourré avec contrôle de l'allongement**

Herstellungsverfahren von Seelendraht mit Dehnungskontrolle

Method for manufacturing cored wire with elongation control

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**04.03.2015 Bulletin 2015/10**

(73) Titulaire: **Lincoln Electric Italia S.r.l.
16010 Serra Ricco (Genoa GE) (IT)**

(72) Inventeur: **SCAPPIN, Michele
31033 CASTELFRANCO (IT)**

(74) Mandataire: **Grosse Schumacher Knauer von
Hirschhausen
Patent- und Rechtsanwälte
Frühlingstrasse 43A
45133 Essen (DE)**

(56) Documents cités:
**EP-A1- 0 158 693    BE-A- 639 125
US-A- 3 668 916**

EP 2 842 647 B1

**Description**

L'invention concerne un procédé de fabrication d'un fil fourré destiné au soudage à l'arc électrique à partir d'un tube métallique étanche rempli par des matières premières pulvérulentes constituant un flux de remplissage, dans lequel le tube est réduit en section de façon contrôlée pour obtenir un tube ayant une épaisseur de paroi et une densité de poudre interne désirées, ainsi qu'une installation de mise en œuvre dudit procédé.

Les fils fourrés sont utilisés dans certains procédés de soudage, notamment à l'arc, par exemple en soudage MIG/MAG ou en soudage à l'arc submergé.

Un fil fourré est habituellement constitué d'une enveloppe externe, encore appelée feuillard, formée d'une bande métallique mise sous forme tubulaire, et d'un flux interne formé d'éléments de remplissage, tels des poudres ou des granulés. Des fils fourrés sont notamment décrits par les documents US-A-6787736 et FR-A-2766399.

Un procédé et une installation de fabrication d'un fil fourré tubulaire étanche, par laminage dans un système à galets rotatifs motorisés avec contrôle des rapports des vitesses de rotation des galets, est par ailleurs connu de EP-A1-0158693.

Deux paramètres essentiels pour évaluer la bonne qualité d'un fil fourré pour soudage à l'arc sont la soudabilité et le taux de dépôt.

La « soudabilité » est la propriété de fusion douce du fil avec bruit réduit pendant le transfert de métal, transfert de métal qui doit être lui-même régulier et dimensions des gouttes réduites. La soudabilité influence l'aspect du cordon, le niveau de fatigue de l'opérateur de soudage et la facilité à obtenir le résultat opérationnel désiré pendant le soudage.

Par ailleurs, le «taux de dépôt» est donné par la quantité de métal fondu (normalement exprimée en kg/h) pendant la durée du soudage avec le fil considéré en utilisant des paramètres fixés, notamment intensité (A), tension (V), et longueur de fil sorti. Le taux de dépôt a une influence directe sur le coût final de la soudure car il détermine le temps nécessaire pour compléter une soudure ou le nombre de soudures que l'installation de soudage, équipée avec le fil considéré, est capable de produire pendant un temps fixé, par exemple pour chaque poste de 8 h.

Les paramètres «taux de dépôt» et « soudabilité » sont directement influencés par l'épaisseur de paroi du tube et par la compression de la poudre du fil fourré.

Il est donc nécessaire de contrôler étroitement ces paramètres, i.e. épaisseur de paroi du tube et compression de la poudre, pour garantir une bonne soudabilité et un taux de dépôt correct.

Or, ces paramètres découlent du procédé de fabrication mis en œuvre pour fabriquer le fil fourré.

Dès lors, le problème qui se pose est de proposer un procédé de fabrication de fil fourré permettant de réduire de façon contrôlée le diamètre du fil fourré sans provoquer une mauvaise compression de la poudre et/ou une variation intempestive de l'épaisseur du tube.

La solution de l'invention est un procédé de fabrication d'un fil fourré tubulaire étanche à partir d'un tube métallique hermétique contenant des matières premières sous forme de poudre, dans lequel :

a) on met en œuvre

i) un système à galets rotatifs motorisés, comprenant au moins deux paires de galets rotatifs motorisés, permettant d'entraîner le tube métallique et d'opérer un laminage dudit tube métallique, et

ii) un système d'entraînement à cabestans comprenant des cabestans rotatifs permettant d'entraîner le tube métallique, et un système de laminage et/ou de tréfilage à galets rotatifs libres permettant d'opérer un laminage et/ou un tréfilage du tube métallique,

b) on réduit progressivement par laminage, par tréfilage ou les deux, le diamètre du tube métallique par passage du tube métallique dans le système à galets rotatifs motorisés et le système de laminage et/ou de tréfilage à galets rotatifs libres entrainés en rotation par le système d'entraînement à cabestans, et

c) on obtient un fil fourré ayant un diamètre final inférieur ou égal à 5 mm.

Selon le procédé de l'invention, pendant la réduction de diamètre du tube métallique, on contrôle l'allongement du tube métallique par contrôle des rapports des vitesses de rotation des galets rotatifs du système à galets rotatifs motorisés et des cabestans rotatifs du système d'entraînement à cabestans.

Simultanément, on opère un effort supplémentaire de traction longitudinal au tube afin d'obtenir l'allongement désiré du tube.

Selon le cas, le procédé de l'invention peut comprendre l'une ou plusieurs des caractéristiques techniques suivantes:

- on opère un effort supplémentaire de traction longitudinal au tube afin d'obtenir l'allongement désiré du tube au moyen d'un système de pré-tension du tube venant exercer une pression mécanique sur le tube.

- on contrôle l'allongement du tube au moyen d'un système pilotage électronique contrôlant la vitesse de rotation d'un ou des cabestans et la force appliquée par le système de pré-tension, préférentiellement le système pilotage électronique comprend un automate programmable industriel et/ou un ordinateur.
- à l'étape b), on réduit progressivement le diamètre du tube métallique par passage du tube dans au moins le système à galets rotatifs motorisés en contrôlant la vitesse de rotation des galets ou d'un ou des cabestans de manière à limiter l'augmentation de la densité de la poudre interne qui doit rester < 100% de la densité apparente pour les formules à bas rutile et de fluorure de calcium, et < 130% pour les poudres à base métallique.
- à l'étape b), la vitesse de rotation des galets est contrôlée au moyen d'un encodeur, encore appelé codeur, calé sur l'axe des galets ou sur le moteur.

L'invention porte aussi sur une installation de fabrication d'un fil fourré tubulaire étanche à partir d'un tube métallique, de préférence hermétique, contenant des matières premières sous forme de poudre, comprenant :

- un système à galets rotatifs motorisés comprenant au moins deux paires de galets rotatifs motorisés permettant d'entraîner le tube contenant les matières premières et d'opérer un laminage dudit tube, et
- un système d'entraînement à cabestans comprenant des cabestans rotatifs permettant d'entraîner le tube contenant les matières premières, et un système de laminage et/ou de tréfilage à galets rotatifs libres permettant d'opérer un laminage et/ou un tréfilage du tube, et
- des moyens de pilotage permettant de contrôler des rapports des vitesses de rotation des galets rotatifs du système à galets rotatifs motorisés et/ou des cabestans rotatifs du système d'entraînement à cabestans,

l'installation étant adaptée à opérer, simultanément à la réduction progressive du diamètre du tube, un effort supplémentaire de traction longitudinal au tube afin d'obtenir l'allongement désiré du tube (4).

Selon le cas, l'installation de l'invention peut comprendre l'une ou plusieurs des caractéristiques techniques suivantes :

- elle comprend en outre un système de pré-tension du tube venant exercer une pré-tension mécanique sur le tube entre un premier cabestan et un deuxième cabestan, en amont du système de laminage et/ou de tréfilage à galets rotatifs libres.
- le système de pré-tension du tube comprend un senseur d'anse mobile actionné par des moyens à piston comprenant au moins un piston hydraulique ou pneumatique, de préférence il comprend en outre des roulements venant exercer une pré-tension sur le fil.
- le moyens de pilotage comprennent un ou des encodeurs ou tout autre système analogue de contrôle de vitesse connecté a un automate programmable ou un ordinateur permettant de modifier le rapport de vitesse des moteurs et donc des galets en fonction de l'allongement et l'épaisseur de du tube désirés.

Selon l'invention, en contrôlant les rapports des vitesses de rotation des galets rotatifs et/ou des cabestans rotatifs, on peut obtenir une épaisseur de paroi du tube suffisamment faible pour contenir à moins de 150%, l'augmentation de la densité de la poudre interne constituant le flux de remplissage, par rapport à la densité apparente de ladite poudre.

En effet, une augmentation de la différence de vitesse entre les premières étapes de laminage et les dernières va permettre de forcer l'allongement du tube par rapport à sa compression et donc de freiner/diminuer le rétrécissement de l'orifice central du tube, donc par-là même de limiter la compression interne des poudres.

Ainsi, on peut voir, dans le Tableau ci-après, un exemple de l'effet d'une augmentation de l'allongement du tube par contrôle des vitesses des galets.

Comme on le constate, une augmentation du rapport des vitesses des galets a pour effet une réduction de l'épaisseur du tube, donc une augmentation du volume disponible pour la poudre, pour un diamètre extérieur du tube, en entrée et en sortie, maintenu constant.

Au final, dans le cas d'un « allongement forcé » (24,2%), le volume disponible pour la poudre reste constant (0% de réduction) et on évite une augmentation de la densité de la poudre elle-même, alors qu'au contraire, dans le cas d'un « allongement réduit » (12,7%), le volume disponible pour la poudre de remplissage diminue de 18,9%.

Tableau

| Rapport des vitesses des galets avant et après réduction : (V avant - V après) / V après (%) | Allongement forcé : 24,2% | | Allongement réduit : 12,7% | |
|---|---|---|---|---|
| Diamètre entrée/sortie (mm) | 12 | 10,73 | 12 | 10,73 |
| Epaisseur entrée/sortie (mm) | 2 | 1,79 | 2 | 2 |

(suite)

| Rapport des vitesses des galets avant et après réduction : (V avant - V après) / V après (%) | Allongement forcé : 24,2% | | Allongement réduit : 12,7% | |
|---|---|---|---|---|
| Section couronne entrée/sortie (mm$^2$) | 62,80 | 50,24 | 62,80 | 54,84 |
| Section orifice entrée/sortie (mm$^2$) | 8 | 7,16 | 8 | 6,73 |
| R%: réduction section tube (%) | 20 | | 20 | |
| RC% réduction section couronne (%) | 20 | | 12,7 | |
| RT% réduction section orifice interne (%) | 20 | | 29,2 | |
| Volume interne du tube disponible pour la poudre avant et après réduction, dans un tube de longueur 1 m, mesuré avant réduction (mm$^3$) | 50,27 | 50,27 | 50,27 | 40,78 |
| Réduction volume disponible pour poudre (%) | 0 | | 18,9 | |

Les rapports de vitesse peuvent être contrôlés au moyen d'encodeurs, plus simplement appelés codeurs, calés sur les moteurs ou sur les arbres des galets eux-mêmes, ou avec tout système de contrôle de vitesse utilisant par exemple un ou des faisceaux laser pour mesurer la vitesse des galets ou directement du tube.

Dit autrement, l'invention repose sur un système de contrôle de l'allongement du fil comprenant un système de contrôle des vitesses de rotation des systèmes d'entraînement du tube, en particulier des galets ou des cabestans rotatifs motorisés, pendant la réduction du diamètre du tube, lequel va contrôler l'allongement du tube et par conséquent l'épaisseur de paroi du tube, ainsi que la densité de la poudre interne.

La présente invention va maintenant être mieux comprise grâce à la description suivante faite en référence aux Figures annexées parmi lesquelles :

- la Figure 1 schématise un système d'entraînement de tube à cabestans rotatifs motorisés et système de pré-tension du tube, et

- la Figure 2 schématise un système d'entraînement de tube à galets rotatifs motorisés.

Il est classique de fabriquer les fils fourrés de soudage sur des lignes de production en continu comprenant des systèmes permettant d'entraîner en translation une bande métallique, couramment appelée « feuillard », destinée à former l'enveloppe métallique externe d'un fil de soudage, de conformer cette bande métallique par rapprochement de ses bords longitudinaux pour obtenir un tube non soudé, c'est-à-dire non hermétique, de remplir de poudres 14 de remplissage le tube non hermétique avant de rapprocher ses bords longitudinaux jusqu'à les amener en contact ou quasi-contact l'un avec l'autre, puis de les unir l'un à l'autre par soudage l'un avec l'autre.

De préférence, le soudage est un soudage laser à pleine pénétration ou à pénétration partielle.

Ceci permet d'obtenir un tube 4 hermétiquement fermé et contenant des poudres de remplissage 14 constituant un flux interne.

Une fois ces opérations accomplies, il est usuel de tréfiler le tube 4, c'est-à-dire de réduire son diamètre D jusqu'à obtenir un diamètre d final désiré, typiquement compris entre 05 et 5 mm, auquel le fil fourré peut être utilisé en soudage à l'arc électrique, par exemple MIG, MAG, TIG, à l'arc submergé....

Dans le cadre de l'invention, la réduction de diamètre D d'un tel tube 4 contenant des poudres de remplissage 14, peut être effectuée, selon le premier aspect, par une ou des passes de laminage dans un (ou plusieurs) système à galets rotatifs 8, 9, 10 motorisés, c'est-à-dire par des galets formeurs 9, 10 entraînés en rotation par des moteurs électriques ou analogues dont la vitesse de rotation est variable et contrôlée.

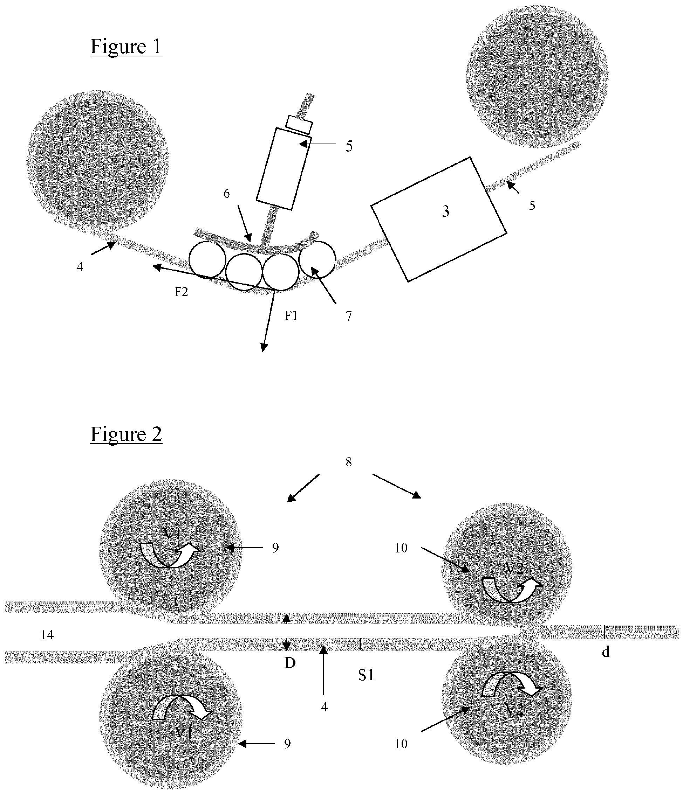

Dans ce cas, l'épaisseur de paroi du tube 4 est contrôlée par un système de pilotage comprenant un ou des encodeurs ou codeurs, ou tout autre système équivalent de contrôle de vitesse connecté à un automate programmable industriel (i.e. PLC pour Programmable Logic Contrôler) ou un ordinateur (PC), et permettant de contrôler ou d'ajuster le rapport des vitesses V1, V2 de deux séries ou paires successives de galets motorisés qui déterminent l'allongement du fil 4 pour chaque pas de réduction de section D, d, comme illustré en Figure 2.

Selon le deuxième aspect, la réduction de diamètre D du tube 4 s'effectue au moyen d'un (ou plusieurs) système de laminage et/ou de tréfilage 3 comprenant une ou des cassettes de laminage 3 à galets non motorisés, c'est-à-dire à galets libres en rotation, avec tube tiré par un système à cabestans 1, 2, 3, ou une ou des filières au travers desquelles le passage du tube 4 est forcé, celui-ci étant là aussi tiré par un système à cabestans 1, 2, 3, comme illustré en Figure 1.

Dans les cas de réduction de diamètre du tube 4 soit par tréfilage au travers d'une ou de filières, soit par utilisation de cassettes de laminage 3 à galets non motorisés, l'épaisseur de paroi du tube 4 est réduite de façon contrôlée par :

- par un système de contrôle des vitesses des cabestans, et
- préférentiellement, par un système de pilotage électronique et un système de pré-tension du tube 5, 6, 7 mécanique qui va augmenter la traction du tube 4 pendant la réduction de section, en favorisant la striction et l'allongement par rapport à la compression normale du tube engendrée par les galets et/ou la filière. Le système de pré-tension du tube 5, 6, 7 vient exercer une pression mécanique sur le tube 4.

Pour comprendre la différence entre un système standard de réduction et celui proposé dans le cadre de la présente invention, on peut les comparer en utilisant un modèle mathématique simple représentant les deux systèmes.

Pour cela, on définit d'abord les paramètres suivants :

- D : diamètre le plus important du tube avant réduction,
- d : diamètre réduction le plus faible après du tube,
- A% : allongement du fil,
- R% : réduction en % de section totale du tube,
- RC% : réduction en % de l'aire de la couronne circulaire,
- RT% : réduction en % de l'aire du passage/orifice interne du tube,
- L1 : longueur du tube avant réduction, et
- L2 : longueur du tube après réduction.

Avec la technologie standard de réduction de diamètre du tube, on peut avoir une réduction de la section du passage/orifice interne plus importante que celle de la couronne circulaire, par exemple en maintenant constante l'épaisseur S1 du tube avant réduction égale à celle S2 après réduction. On a alors, à épaisseur constante (i.e. S1=S2), les équations suivantes :

1)

$$A\% = (L1-L2)/L1 = RC\%/(1-RC\%)$$

2)

$$R\% = 1-d^2/D^2$$

3)

$$RC\% = 1-(d^2-(d-2S)^2)/(D^2-(D-2S)^2)$$

4)

$$RT\% = 1- (d-2S2)^2/(D-2S1)^2$$

avec RC% < R% < RT%.

La section de la couronne circulaire va donc se réduire moins par rapport à la section totale du tube et ce, aux dépens de l'orifice/passage interne du tube qui subit une réduction de section supérieure en provoquant une compression non désirée de la poudre formant le flux qui s'y trouve et ce, généralement à plus de 150% de la densité de la poudre interne constituant le flux de remplissage par rapport à la densité apparente de ladite poudre.

Au contraire, avec la solution proposée dans le cadre de la présente invention, la totalité des zones du tube, i.e. aire de l'orifice et de la couronne circulaire, va diminuer avec le même taux de réduction selon les équations suivantes :

5)

$$S2= (S1^2 \, (1-R\%))^{1/2}$$

6)

$$A\% = (L1-L2)/L1 = RC\%/(1-RC\%) \approx R\%/(1-R\%)$$

7)

$$RC\% \approx RT\% \approx R\% = 1-d^2/D^2$$

où $RC\% \approx R\% \approx RT\%$

Dans ce cas, la section de la couronne circulaire va se réduire de façon comparable à la section totale du tube. L'orifice/passage interne du tube subit une réduction de section qui est compensée par l'allongement du tube en maintenant constant le volume.

Une compression de la poudre ne se produit donc pas ou peu et, dans tous les cas, l'augmentation est limitée à moins de 150% de la densité de la poudre interne constituant le flux de remplissage par rapport à la densité apparente de ladite poudre.

En fait, pour produire un fil ayant les caractéristiques de soudabilité voulues, il ne faut pas comprimer la poudre après compactage de celle-ci dans le tube (processus qui est effectué avec un allongement classique en ligne (selon les équations 1) et 3)), dans la première phase de production mais respecter un rapport de vitesse entre les galets rotatifs du système d'entrainement à galets motorisés qui permette d'obtenir un allongement plus important en ligne (selon les équations 6) et 7)).

La valeur d'allongement est contrôlée dans les galets 9, 10 du système laminoir 8 par un système de pilotage électronique qui va ajuster les vitesses de chaque pas par rapport à celle du pas avant et après pour obtenir l'allongement désiré (voir Figure 2). Le pas (de réduction) est un module de la machine qui effectue une réduction du diamètre qui est multipliée un nombre de fois donné en fonction de la réduction totale nécessaire, par exemple 4 ou 6 ou 12 fois.

Le système de pilotage électronique comprend préférentiellement un automate programmable industriel du type PLC et/ou un ordinateur du type PC.

Par ailleurs, la valeur d'allongement peut être contrôlée, pendant le tréfilage ou laminage par cassettes à galets non-motorisées 3, en jouant sur le rapport des vitesses des deux cabestans 1, 2 servant à entrainer le tube 4, avant et après réduction de la section D du tube 4 rempli de poudres 14.

Toutefois, dans ce cas, l'erreur de calcul de l'allongement peut être plus élevée car il y a une accumulation de fil tubulaire 4 entre les cabestans 1, 2 résultant de l'anse du fil 4 qui peut varier pendant la production. Elle est contrôlée en vitesse par la position du système de pré-tension du tube 5, 6, 7, qui maintient l'anse et le fil en traction. Un senseur/capteur d'anse mesure la position, c'est-à-dire l'angle ou le déplacement, du bras porteur 6 et on peut alors estimer la position donnée du tube et donc la quantité de tube accumulée nécessaire pour contrôler l'allongement. Le système de maintien en tension du fil de la Figure 1 a normalement la fonction de contrôler l'accumulation du fil entre deux cabestans en changeant le rapport de vitesse de ceux-ci pour ne pas rompre le fil pendant la réduction de diamètre. En effet, si le rapport de vitesse entre les cabestans n'est pas correct le fil peut se rompre ou s'accumuler en quantité trop élevée.

Ce système de maintien en tension et de contrôle de position d'anse permet donc d'opérer un contrôle efficace de l'allongement du fil soit en modulant la vitesse des cabestans, soit en appliquant une tension supplémentaire donnée de l'anse du tube via un moyen à piston 5 dimensionné à cet effet.

Cette accumulation de fil tubulaire 4 peut donc faire varier la différence de vitesse des cabestans 1, 2 indépendamment de l'allongement du fil 4 tubulaire.

En d'autres termes, la longueur de fil tubulaire 4 entre les cabestans 1, 2 et l'effet élastique du fil tubulaire 4 vont générer des erreurs rendant nécessaire l'ajouter d'un système supplémentaire de contrôle de pré-tension du fil 5, 6, 7 comprenant un senseur d'anse mobile actionné par des moyens à piston 5 comprenant au moins un piston hydraulique ou pneumatique permettant d'approcher ou d'éloigner les roulements 7 pour calculer la longueur du tube 4 libre entre les cabestans 1, 2 nécessaire pour contrôler correctement l'allongement du tube en modifiant la vitesse des cabestans 1, 2.

Dans le même temps, le piston 5 du système de pré-tension 5, 6, 7, en exerçant une force de pression sur les roulements 7, peut augmenter la force de traction qui s'exerce sur le tube 4, pendant la réduction de son diamètre, en favorisant l'allongement dudit tube proportionnellement à l'augmentation de la pression exercée par le piston 5.

En fait, le système de pré-tension 5, 6, 7 du tube 4, tel qu'illustré en Figure 1, est conçu pour ajouter un effort de traction longitudinale au tube 4 afin d'obtenir l'allongement désiré du tube 4. Cet allongement est contrôlé ou ajusté (en valeur moyenne) par contrôle des vitesse des cabestans 1, 2. On peut aussi adapter le couple de traction pour modifier l'allongement selon une valeur théoriquement calculée.

Pour arriver à produire le fil 4 avec des caractéristiques de soudabilité voulues, il faut que le compactage de la poudre 14 interne du tube 4 au diamètre final d compris entre 0,8 et 4,8 mm, soit compris dans des limites fixées par rapport à la densité apparente de la poudre. Ces limites sont fonction de la typologie de poudre 14 qu'on peut résumer en trois groupes :

- Poudre à base de rutile (densité 1,7-2,4): densité de la poudre compactée entre +20 et +100 % de la densité apparente ;
- Poudre à base de fluorure de calcium (densité 1,2-2,1) : densité de la poudre compactée entre +20 et +100 % de la densité apparente ; et
- Poudre à base métallique (densité 2,1-3,8) : densité de la poudre compactée entre +40 et +130 % de la densité apparente.

L'épaisseur du tube 4 va être réduite tel que le rapport entre l'épaisseur initiale et l'épaisseur finale soit compris entre 3 et 14, et le rapport entre le diamètre et l'épaisseur du fil au diamètre final soit compris entre 2,5 et 6.

Dans tous les cas, ceci permet d'obtenir une épaisseur de paroi du tube suffisamment faible pour contenir à moins de 150% l'augmentation de la densité de la poudre interne au tube par rapport à la densité apparente de ladite poudre.

**Revendications**

1. Procédé de fabrication d'un fil fourré tubulaire étanche à partir d'un tube métallique (4) contenant des matières premières (14) sous forme de poudre, dans lequel :

    a) on met en oeuvre pour entraîner le tube métallique (4) :

        i) un système à galets rotatifs motorisés (8, 9, 10) comprenant plusieurs galets rotatifs motorisés (9, 10) permettant d'entraîner le tube métallique (4) et d'opérer un laminage dudit tube métallique (4), le système à galets rotatifs motorisés (8, 9, 10) comprenant au moins 2 paires de galets rotatifs motorisés (9, 10) et
        ii) un système d'entraînement à cabestans (1, 2, 3) comprenant des cabestans rotatifs (1, 2) permettant d'entraîner le tube métallique (4), et un système de laminage et/ou de tréfilage (3) à galets rotatifs libres ou à filière permettant d'opérer un laminage et/ou un tréfilage du tube,

    b) on réduit progressivement par laminage, par tréfilage ou les deux, le diamètre du tube (4) métallique par passage du tube (4) dans le système à galets rotatifs motorisés (8, 9, 10) et le système de laminage et/ou de tréfilage (3) à galets rotatifs libres entraînés en rotation par le système d'entraînement à cabestans (1, 2, 3), et
    c) on obtient un fil fourré ayant un diamètre final (d) inférieur ou égal à 5 mm, et
    on contrôle, pendant la réduction de diamètre du tube (4), l'allongement dudit tube (4) par contrôle des rapports des vitesses de rotation :

        - des galets rotatifs (9, 10) du système à galets rotatifs motorisés (8, 9, 10) et
        - des cabestans rotatifs (1, 2) du système d'entraînement à cabestans (1, 2, 3), et, simultanément à la réduction progressive du diamètre du tube (4) opérée à l'étape b), on opère un effort supplémentaire de traction longitudinal au tube afin d'obtenir l'allongement désiré du tube (4).

2. Procédé selon la revendication précédente, **caractérisé en ce qu'**on opère un effort supplémentaire de traction longitudinal au tube (4) afin d'obtenir l'allongement désiré du tube (4) au moyen d'un système de pré-tension du tube (5, 6, 7) venant exercer une pression mécanique sur le tube (4).

3. Procédé selon l'une des revendications précédentes, **caractérisé en ce qu'**on contrôle l'allongement du tube (4) au moyen d'un système pilotage électronique contrôlant la vitesse de rotation d'un ou des cabestans (1, 2) et la force appliquée par le système de pré-tension (5, 6, 7).

4. Procédé selon la revendication 1, **caractérisé en ce qu'**à l'etape b), on réduit progressivement le diamètre du tube métallique par passage du tube (4) dans au moins le système à galets rotatifs motorisés (8, 9, 10) en contrôlant la vitesse de rotation (V1, V2) des galets (9, 10) ou d'un ou des cabestans (1,2).

5. Installation de fabrication d'un fil fourré tubulaire étanche à partir d'un tube (4) métallique, de préférence hermétique, contenant des matières premières (14) sous forme de poudre, comprenant :

- un système à galets rotatifs motorisés (8, 9, 10) comprenant plusieurs galets rotatifs motorises (9, 10) permettant d'entrainer le tube (4) contenant les matières premières (14) et d'opérer un laminage dudit tube (4), le système à galets rotatifs motorisés (8, 9, 10) comprenant au moins 2 paires de galets rotatifs motorisés (9, 10) et
- un système d'entraînement à cabestans (1, 2, 3) comprenant des cabestans rotatifs (1, 2) permettant d'entraîner le tube (4) contenant les matières premières (14), et un système de laminage et/ou de tréfilage à galets rotatifs libres (3) permettant d'opérer un laminage et/ou un tréfilage du tube (4), et
- des moyens de pilotage permettant de contrôler des rapports des vitesses de rotation des galets rotatifs du système à galets rotatifs motorisés (8, 9, 10) et des cabestans (1, 2, 3) rotatifs du système d'entraînement à cabestans (1, 2, 3),

l'installation étant adaptée à opérer, simultanément à la réduction progressive du diamètre du tube (4), un effort supplémentaire de traction longitudinal au tube afin d'obtenir l'allongement désiré du tube (4).

6. Installation selon la revendication 5, **caractérisée en ce qu'**elle comprend en outre un système de pré-tension du tube (5, 6, 7) venant exercer une pré-tension mécanique sur le tube (4) entre un premier cabestan (1) et un deuxième cabestan (2), en amont du système de laminage et/ou de tréfilage (3) à galets rotatifs libres.

7. Installation selon l'une des revendications 5 ou 6, **caractérisée en ce que** le système de pré-tension du tube (5, 6, 7) comprend un senseur d'anse (6) mobile actionné par des moyens à piston (5) comprenant au moins un piston hydraulique ou pneumatique, de préférence il comprend en outre des roulements (7) venant exercer une pré-tension sur le fil (4).

8. Installation selon la revendication 5, **caractérisée en ce que** les moyens de pilotage comprennent un ordinateur ou un automate programmable.

**Patentansprüche**

1. Verfahren zur Herstellung eines versiegelten röhrenförmigen Seelendrahts aus einem Metallrohr (4), enthaltend Rohmaterialien (14) in Pulverform, wobei:

a) zum Antreiben des Metallrohrs (4) Folgendes implementiert wird:

i) ein motogetriebenes Drehwalzensystem (8, 9, 10), umfassend eine Mehrzahl von motorgetriebenen Drehwalzen (9, 10) zum Antreiben des Metallrohrs (4) und zum Walzen des Metallrohrs (4), wobei das motorgetriebene Drehwalzensystem (8, 9, 10) mindestens zwei Paare von motorgetriebenen Drehwalzen (9, 10) umfasst, und
ii) ein Windenantriebssystem (1, 2, 3) mit drehenden Winden (1, 2) zum Antreiben des Metallrohrs (4) und ein Walz- und/oder Ziehsystem (3) mit frei drehenden Walzen oder einer Düse zum Walzen und/oder Ziehen des Rohrs,

b) der Durchmesser des Metallrohrs (4) allmählich durch Walzen, Ziehen oder beides reduziert wird, indem das Rohr (4) durch das motorgetriebene Drehwalzensystem (8, 9, 10) und das Walz- und/oder Ziehsystem (3) mit frei drehenden Walzen geführt wird, die durch das Windenantriebssystem (1, 2, 3) zur Drehung angetrieben werden, und
c) ein Seelendraht mit einem Enddurchmesser (d) von weniger als oder gleich 5 mm erhalten wird, und

die Dehnung des Rohrs (4) während der Reduzierung des Durchmessers des Rohrs (4) kontrolliert wird, und zwar durch Kontrolle der Drehzahlverhältnisse:

- der Drehwalzen (9, 10) des motorgetriebenen Drehwalzensystems (8, 9, 10) und
- der drehenden Winden (1, 2) des Windenantriebssystems (1, 2, 3), und wobei gleichzeitig mit der in Schritt b) durchgeführten allmählichen Reduzierung des Durchmessers des Rohrs (4) eine zusätzliche Zugkraft in Längsrichtung auf das Rohr ausgeübt wird, um die gewünschte Dehnung des Rohrs (4) zu erreichen.

2. Verfahren nach dem vorhergehenden Anspruch, **dadurch gekennzeichnet, dass** eine zusätzliche Zugkraft in Längsrichtung auf das Rohr (4) ausgeübt wird, um die gewünschte Dehnung des Rohrs (4) zu erreichen, und zwar mittels eines Rohrvorspannsystems (5, 6, 7), das einen mechanischen Druck auf das Rohr (4) ausübt.

3. Verfahren nach einem der vorhergehenden Ansprüche, **dadurch gekennzeichnet, dass** die Dehnung des Rohrs (4) mit Hilfe eines elektronischen Steuersystems kontrolliert wird, das die Drehzahl einer oder mehrerer Winde/n (1, 2) und die durch das Vorspannsystem (5, 6, 7) aufgebrachte Kraft kontrolliert.

4. Verfahren nach Anspruch 1, **dadurch gekennzeichnet, dass** in Schritt b) der Durchmesser des Metallrohrs allmählich verringert wird, indem das Rohr (4) durch mindestens das motorgetriebene Drehwalzensystem (8, 9, 10) geführt wird, wobei die Drehzahl (V1, V2) der Walzen (9, 10) oder einer oder mehrerer Winde/n (1, 2) kontrolliert wird.

5. Anlage zur Herstellung eines versiegelten röhrenförmigen Seelendrahts aus einem vorzugsweise hermetischen Metallrohr (4), enthaltend Rohmaterialien (14) in Pulverform, umfassend:

   - ein motogetriebenes Drehwalzensystem (8, 9, 10), umfassend eine Mehrzahl von motorgetriebenen Drehwalzen (9, 10) zum Antreiben des die Rohmaterialien (14) enthaltenden Rohrs (4) und zum Walzen des Rohrs (4), wobei das motorgetriebene Drehwalzensystem (8, 9, 10) mindestens zwei Paare von motorgetriebenen Drehwalzen (9, 10) umfasst, und
   - ein Windenantriebssystem (1, 2, 3) mit drehenden Winden (1, 2) zum Antreiben des die Rohmaterialien (14) enthaltenden Rohrs (4) und ein Walz- und/oder Ziehsystem mit frei drehenden Walzen (3) zum Walzen und/oder Ziehen des Rohrs,
   - Steuermittel zur Kontrolle der Drehzahlverhältnisse der Drehwalzen des motorgetriebenen Drehwalzensystems (8, 9, 10) und der drehenden Winden (1, 2, 3) des Windenantriebssystems (1, 2, 3),

   wobei die Anlage dazu ausgelegt ist, gleichzeitig mit der allmählichen Reduzierung des Durchmessers des Rohrs (4) eine zusätzliche Zugkraft in Längsrichtung auf das Rohr auszuüben, um die gewünschte Dehnung des Rohrs (4) zu erreichen.

6. Anlage nach Anspruch 5, **dadurch gekennzeichnet, dass** sie ferner ein Rohrvorspannsystem (5, 6, 7) umfasst, das eine mechanische Vorspannung auf das Rohr (4) zwischen einer ersten Winde (1) und einer zweiten Winde (2) stromaufwärts des Walz- und/oder Ziehsystems (3) mit frei drehenden Walzen ausübt.

7. Anlage nach einem der Ansprüche 5 oder 6, **dadurch gekennzeichnet, dass** das Rohrvorspannsystem (5, 6, 7) einen beweglichen Biegesensor (6) umfasst, der durch Kolbenmittel (5) betätigt wird, die mindestens einen hydraulischen oder pneumatischen Kolben umfassen, wobei es vorzugsweise ferner Lager (7) umfasst, die eine Vorspannung auf den Draht (4) ausüben.

8. Anlage nach Anspruch 5, **dadurch gekennzeichnet, dass** die Steuermittel einen Computer oder einen programmierbaren Automaten umfassen.

## Claims

1. A method for manufacturing a sealed tubular cored wire from a metallic tube (4) containing raw materials (14) in powder form, in which method:

   a) the following are used to draw in the metallic tube (4):

   i) a motorised rotating roller system (8, 9, 10) comprising a plurality of motorised rotating rollers (9, 10) making it possible to draw in the metallic tube (4) and to perform a rolling of said metallic tube (4), the motorised rotating roller system (8, 9, 10) comprising at least two pairs of motorised rotating rollers (9, 10), and

ii) a capstan drive system (1, 2, 3) comprising rotating capstans (1, 2) making it possible to draw in the metallic tube (4), and a rolling and/or wire drawing system (3) with free rotating rollers or a nozzle making it possible to perform a rolling and/or a wire drawing of the tube,

b) the diameter of the metallic tube (4) is progressively reduced by rolling, by wire drawing, or both, by passing the tube (4) through the motorised rotating roller system (8, 9, 10) and the rolling and/or wire drawing system (3) comprising free rotating rollers driven in rotation by the capstan drive system (1, 2, 3), and
c) a cored wire having a final diameter (d) less than or equal to 5 mm is obtained, and

the extension of said tube (4) is controlled during the reduction of the diameter of the tube (4) by controlling the ratios of the rotation speeds:

- of the rotating rollers (9, 10) of the motorised rotating roller system (8, 9, 10) and
- of the rotating capstans (1, 2) of the capstan drive system (1, 2, 3), and, simultaneously with the progressive reduction of the diameter of the tube (4) performed in step b), an additional longitudinal tractive force is exerted on the tube in order to obtain the desired elongation of the tube (4).

2. The method according to the preceding claim, **characterised in that** an additional longitudinal tractive force is exerted on the tube (4) in order to obtain the desired elongation of the tube (4) by means of a tube prestressing system (5, 6, 7) exerting a mechanical pressure on the tube (4).

3. The method according to one of the preceding claims, **characterised in that** the elongation of the tube (4) is controlled by means of an electronic control system controlling the rotation speed of one or more of the capstans (1, 2) and the force applied by the prestressing system (5, 6, 7).

4. The method according to claim 1, **characterised in that**, in step b), the diameter of the metallic tube is reduced progressively by passing the tube (4) through at least the motorised rotating roller system (8, 9, 10) by controlling the rotation speed (V1, V2) of the rollers (9, 10) of one or more of the capstans (1, 2).

5. An installation for manufacturing a sealed tubular cored wire from a metallic, preferably hermetic tube (4), containing raw materials (14) in powder form, said installation comprising:

- a motorised rotating roller system (8, 9, 10) comprising a plurality of motorised rotating rollers (9, 10) making it possible to draw in the tube (4) containing the raw materials (14) and to perform a rolling of said tube (4), the motorised rotating roller system (8, 9, 10) comprising at least 2 pairs of motorised rotating rollers (9, 10), and
- a capstan drive system (1, 2, 3) comprising rotating capstans (1, 2) making it possible to draw in the tube (4) containing the raw materials (14), and a rolling and/or wire drawing system comprising free rotating rollers (3) making it possible to perform a rolling and/or a wire drawing of the tube (4), and
- control means making it possible to control the rotation speed ratios of the rotating rollers of the motorised rotating roller system (8, 9, 10) and of the rotating capstans (1, 2, 3) of the capstan drive system (1, 2, 3),

the installation being suitable for exerting, simultaneously with the progressive reduction of the diameter of the tube (4), an additional longitudinal tractive force on the tube in order to obtain the desired elongation of the tube (4).

6. The installation according to claim 5, **characterised in that** it also comprises a tube prestressing system (5, 6, 7) exerting a mechanical prestress on the tube (4) between a first capstan (1) and a second capstan (2), upstream of the rolling and/or wire drawing system (3) comprising free rotating rollers.

7. The installation according to one of claims 5 or 6, **characterised in that** the tube prestressing system (5, 6, 7) comprises a movable deflection sensor (6) actuated by means of a piston (5) comprising at least one hydraulic or pneumatic piston, preferably also comprising bearings (7) exerting a prestress on the wire (4).

8. The installation according to claim 5, **characterised in that** the control means comprise a computer or a programmable automaton.

## Figure 1

## Figure 2

**EP 2 842 647 B1**

## RÉFÉRENCES CITÉES DANS LA DESCRIPTION

**Documents brevets cités dans la description**

- US 6787736 A
- FR 2766399 A

- EP 0158693 A1